# EUROPEAN PATENT APPLICATION

(11) **EP 1 548 546 A2**
(43) Date of publication of application: **29.06.2005**
(21) Application number: 04028125.5
(22) Date of filing: 26.11.2004
(51) Int. Cl.: G06F 1/30

(54) **Method and circuit for preservation of user data in a mobile terminal**

(30) Priority: 23.12.2003 KR 2003095128
(71) Applicant: Samsung Electronics Co., Ltd., Suwon-si, Gyeonggi-do (KR)
(72) Inventor: Ko, Moon-Jung Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed are a method and a circuit for preserving user data temporarily stored in a volatile memory of a mobile terminal. When there is a change in the user data, the changed user data is formatted in a file and backed up in a nonvolatile memory. Therefore, it is possible to stably preserve the user data without using a backup battery for backing up the operation power for the volatile memory.

## Description

The present invention relates to mobile terminals, and more particularly to a method and a circuit for preserving user data in a mobile terminal.

Generally, mobile terminals including a mobile communication terminal, PDA (Personal Digital Assistant), PDA phones, temporarily store user data, that is being processed, in volatile memory such as a SRAM (Static Random Access Memory). The user data refers to data that can be modified, added or deleted using functions such as a phone book, scheduler, address list, alarm, memo, voice message, and photograph function embedded in a mobile terminal. While such user data is stored in the volatile memory, the battery power of the mobile terminal may change from a low level to an off state. In such an event, the user data stored in the volatile memory will be lost.

As a solution to this problem, user data stored in a volatile RAM (Random Access Memory) can be backed up in nonvolatile flash memory when the amount of remaining battery power becomes lower than some predetermined level. Since the user data stored in the volatile memory is backed up in the flash memory before power-off, it can be preserved even if the battery power level is changed from the low level to the off state.

Also, users may inadvertently drop their mobile terminals during a call or other operations, thereby causing the batteries to separate from the main body. In case of a sudden power loss caused by the battery separation, the user data stored in the volatile memory cannot be backed up or preserved in the nonvolatile memory.

To prepare for such a case, a backup battery can be embedded in a mobile terminal to supply backup power to the volatile memory. While the main battery power is in a normal state, it is supplied as an operation power to the volatile memory and charges the backup battery. During a power failure, the backup battery serves as a source of operation power supplied to the volatile memory. Accordingly, even if the main battery is suddenly separated from the mobile terminal during a call or other operations, the user data stored in the volatile memory can be preserved.

However, an embedded backup battery increases the size of a mobile terminal. Due to limitations in size of mobile terminals, only small-capacity backup batteries can be used as backup batteries in mobile terminals. Since such backup batteries are unstable in voltage and vulnerable to noise, they cannot ensure the complete preservation of user data stored in a volatile memory.

Accordingly, the present invention has been made to solve the above-mentioned problems occurring in the prior art,.

It is the object of the present invention to provide a method and a circuit for stably preserving user data temporarily stored in a volatile memory of a mobile terminal, without using a backup battery for backing up the operation power for the volatile memory.

This object is solved by the subject matter of the independent claims.

Preferred embodiments are defined in the dependent claims.

In order to accomplish the above object of the invention, whenever there is a change in the user data temporarily stored in the volatile memory, the changed user data is formatted in a file and backed up or saved in a nonvolatile memory.

The above features and advantages of the present invention will be more apparent from the following detailed description taken in conjunction with the accompanying drawings, in which:
FIG 1 is a block diagram of a user data preservation circuit according to the present invention;
FIG 2 is a flow chart of a process of backing up user data according to the present invention; and

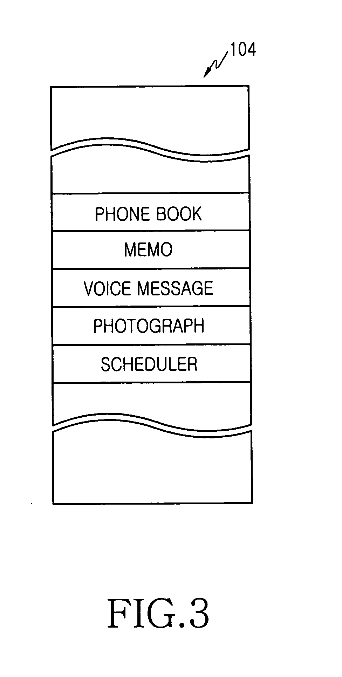

FIG 3 is a map of a flash memory for storing a backed-up user data file according to the present invention.

Hereinafter, a preferred embodiment of the present invention will be described with reference to the accompanying drawings. In the following description of the present invention, a detailed description of known functions and configurations incorporated herein will be omitted when it may make the subject matter of the present invention rather unclear.

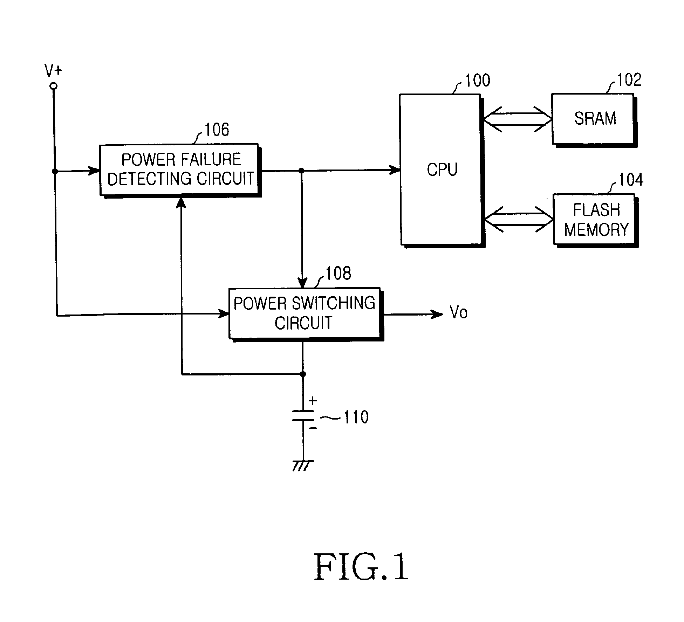

FIG. 1 is a block diagram showing a user data preservation circuit according to the present invention. As shown in FIG. 1, a SRAM (Static Random Access Memory) 102 can be used as volatile memory, while a flash memory 104 can be used as nonvolatile memory. A CPU (Central Processing Unit) 100 is a main controller of a mobile terminal that adopts the user data preservation circuit as shown. The CPU 100 temporarily stores user data such as a phone book, scheduler, address list, alarm, memo, voice message and photograph function, that is being processed during implementation of functions in the SRAM 102.

An operation power Vo that operates the CPU 100, SRAM 102 and flash memory 104 is supplied from a power switching circuit 108. The power switching circuit 108 supplies either a battery power V+ of a battery (not shown) of the mobile terminal or a charging power of a super capacitor 110 as the operation power Vo to the CPU 100, SRAM 102 and flash memory 104 according to the output from a power failure detecting circuit 106.

The power failure detecting circuit 106 is a comparator for comparing a voltage level of the battery power V+ with a predetermined reference level. When the voltage level of the battery power V+ becomes lower than the reference level, the power failure detecting circuit 106 determines that the battery power has terminated. At that time, the power failure detecting circuit 106 outputs a power failure detecting signal to the power switching circuit 108 and applies the same signal as an interrupt signal to the CPU 100.

When the battery power V+ is normal, that is, when no power failure detecting signal is applied from the power failure detecting circuit 106, the power switching circuit 108 supplies the battery power V+ as the operation power Vo to the CPU 100, SRAM 102 and flash memory 104. At this time, the power switching circuit 108 also applies the battery power V+ to the super capacitor 110 so as to charge the super capacitor 110. The super capacitor 110 is generally a short-time power backup capacitor with high capacity. The present invention uses a super capacitor capable of supplying the operation power Vo, for example, over one second.

If the battery is suddenly separated from the mobile terminal, the power failure detecting circuit 106 will detect the power failure caused by the battery separation. The power switching circuit 108 will then supply the charging power of the super capacitor 110 as the operation power Vo to the CPU 100, SRAM 102 and flash memory 104. Accordingly, the CPU 100, SRAM 102 and flash memory 104 can normally operate for a short time, i.e., for one second or so. Since the power failure detecting circuit 108 must be operating during the time of separation of the battery from the mobile terminal, the charging power of the super capacitor 110 is also used as the operation power for the power failure detecting circuit 108.

When there is a change in the user data temporarily stored in the SRAM 102, the CPU 100 formats the changed user data in a file and flushes the file to be backed up or saved in the flash memory 104.

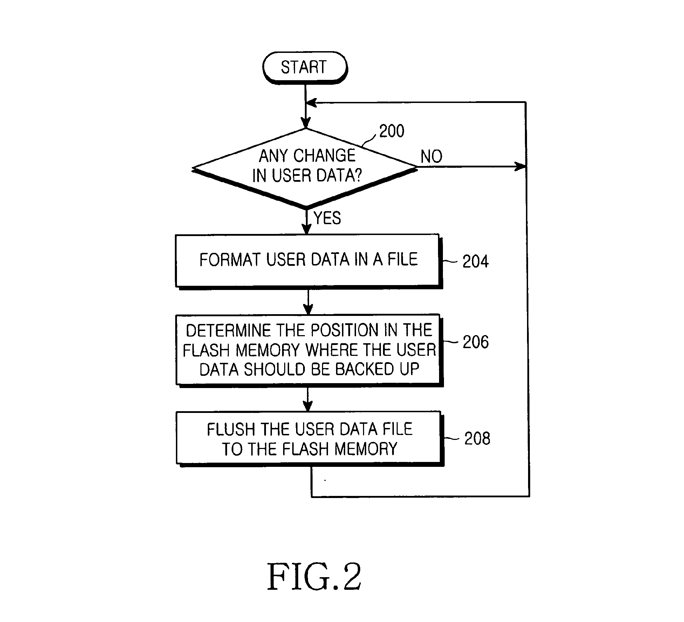

FIG 2 is a flow chart showing the operations of the CPU 100. When any modification, addition or deletion is made to the user data temporarily stored in the SRAM 102 at step 200, the CPU 100 proceeds with step 204. At step 204, the changed user data is formatted in a file. At step 206, the CPU 100 determines the position in the flash memory 104 to which the formatted user data file should be backed up or saved. At step 208, the user data file is flushed or copied to the flash memory 104 to be backed up or saved. Upon completion of the backup process, the CPU 100 returns to step 200. Whenever there is a change in the user data temporarily stored in the SRAM 102, the changed user data is backed up in the flash memory 104 by the process as shown in FIG 2.

Therefore, through the use of the present invention, the user data stored in the SRAM 102 can be preserved even when the battery is separated from the mobile terminal during a call or other operations. Also, since the user data, if changed, is formatted in a file and backed up or saved in the flash memory 104, it can be easily managed as files. When the mobile terminal resumes a normal operation upon backup of the user data or insertion of the separated battery, the user data is moved again or restored to the SRAM 102 to be readily processed.

It is also likely that the battery may be separated from the mobile terminal during the process of backing up the changed user data in the flash memory 104. In such an event, the charging power of the super capacitor 110 is supplied as the operation power Vo to the CPU 100, SRAM 102 and flash memory 104. Also, the power failure detecting circuit 106 applies an interrupt signal for informing the CPU 100 about the power failure. Accordingly, the process of backing up the changed user data in the flash memory 104 can be completed normally even if the battery is suddenly separated. Upon recognizing the occurrence of battery separation, the CPU 100 performs all predetermined routines for a power-off mode and turns off the mobile terminal in a normal fashion, while the charging power of the super capacitor 110 is being supplied.

As explained above, whenever any change to the user data temporarily stored in the volatile memory is made, the present invention stores the changed user data as a file in the nonvolatile memory, thereby ensuring stable preservation of the user data. The present invention can preserve the user data, without using a backup battery for backing up the operation power of the volatile memory.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A method for preserving user data temporarily stored in a volatile memory of a mobile terminal, comprising the steps of:
formatting changed user data in a file when any change is made to the user data; and
backing up the formatted user data file in a nonvolatile memory.

2. The method according to claim 1, wherein said change is any of modification, addition and deletion made to said user data.

3. A user data preservation circuit for preserving user data temporarily stored in a volatile memory of a mobile terminal, comprising:
a nonvolatile memory; and
a CPU for formatting the user data, if changed, in a file and backing up the formatted user data file in the nonvolatile memory.

4. The user data preservation circuit according to claim 3, further comprising:
a super capacitor charged by a battery power of the mobile terminal;
a power failure detecting circuit operated by a charging power of the super capacitor and detecting a power failure of the battery power by comparing a voltage level of the battery power with a reference level; and
a power switching circuit for supplying the charging power of the super capacitor as an operation power to the nonvolatile memory and the CPU in response to the detection of power failure.

5. The user data preservation circuit according to claim 3, wherein a change in the user data is any of modification, addition and deletion made to said user data.
